# EUROPEAN PATENT SPECIFICATION

(11) **EP 2 224 343 B1**
(45) Date of publication and mention of the grant of the patent: **22.08.2012**
(21) Application number: 10151912.2
(22) Date of filing: 28.01.2010
(51) Int. Cl.: G06F 12/08, G06F 12/12

(54) **Data processing system**
Datenverarbeitungssystem
Système de traitement de données

(30) Priority: 26.02.2009 JP 2009044652
(43) Date of publication of application: 01.09.2010
(73) Proprietor: FUJITSU LIMITED, Kawasaki-shi, Kanagawa 211-8588 (JP)
(72) Inventor: Sugizaki, Go, Kawasaki-shi, Kanagawa 211-8588 (JP)
(74) Representative: Stebbing, Timothy Charles

(56) References cited:
- US-A- 5 937 431
- US-B1- 6 408 362
- US-B1- 7 430 639

## Description

The present invention relates to a data processing system.

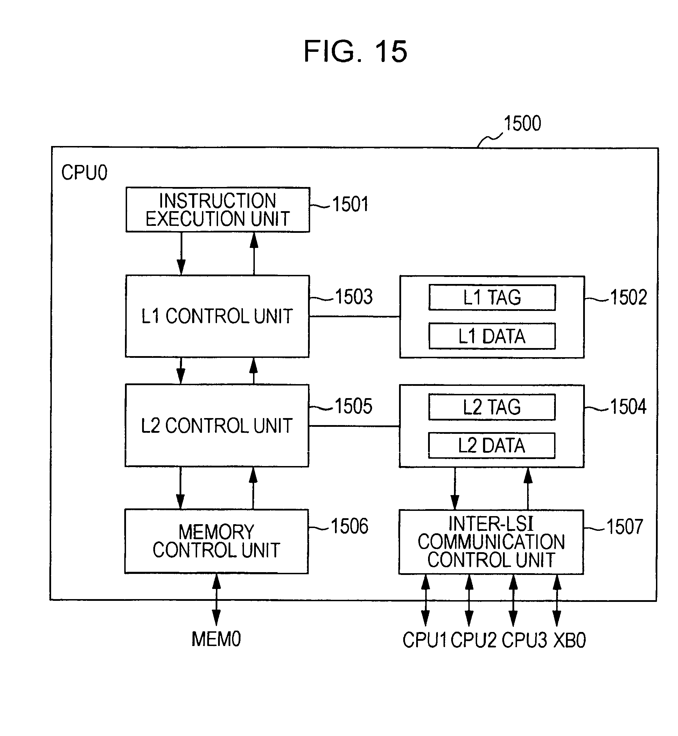

Shared memory information processing devices have been used. FIG. 15 is a diagram illustrating caches in a Central Processing Unit (CPU) used in a shared memory information processing device.

A CPU 1500 used in a shared memory information processing device includes an instruction execution unit 1501, an L1 cache 1502, an L1 control unit 1503, an L2 cache 1504, an L2 control unit 1505, a memory control unit 1506, and an inter-LSI communication control unit 1507.

The L1 cache 1502 and the L2 cache 1504 store data frequently used by the instruction execution unit 1501.

Upon receiving a read request from the instruction execution unit 1501, the L1 control unit 1503 reads data from the L1 cache 1502 and outputs the data to the instruction execution unit 1501. Moreover, when the data requested by the instruction execution unit 1501 does not exist in the L1 cache 1502, the L1 control unit 1503 issues a request to read the data to the L2 control unit 1505. Then, the L2 control unit 1505 reads the data from the L2 cache 1504 and outputs the data to the instruction execution unit 1501.

Data stored in the L1 cache 1502 is managed, using management information called an "L1 tag". The address information, registration status, and the like of data stored in the L1 cache 1502 are registered in the L1 tag. Data stored in the L1 cache 1502 is called "L1 data".

Similarly, data stored in the L2 cache 1504 is managed, using management information called an "L2 tag". Data stored in the L2 cache 1504 is called "L2 data".

The memory control unit 1506 accesses a local memory MEMO in response to a request from the L2 control unit 1505.

The inter-LSI communication control unit 1507 issues a read request to another node upon receiving a read request from the L2 control unit 1505. Moreover, the inter-LSI communication control unit 1507 issues a store instruction to another node upon receiving a store request from the L2 control unit 1505.

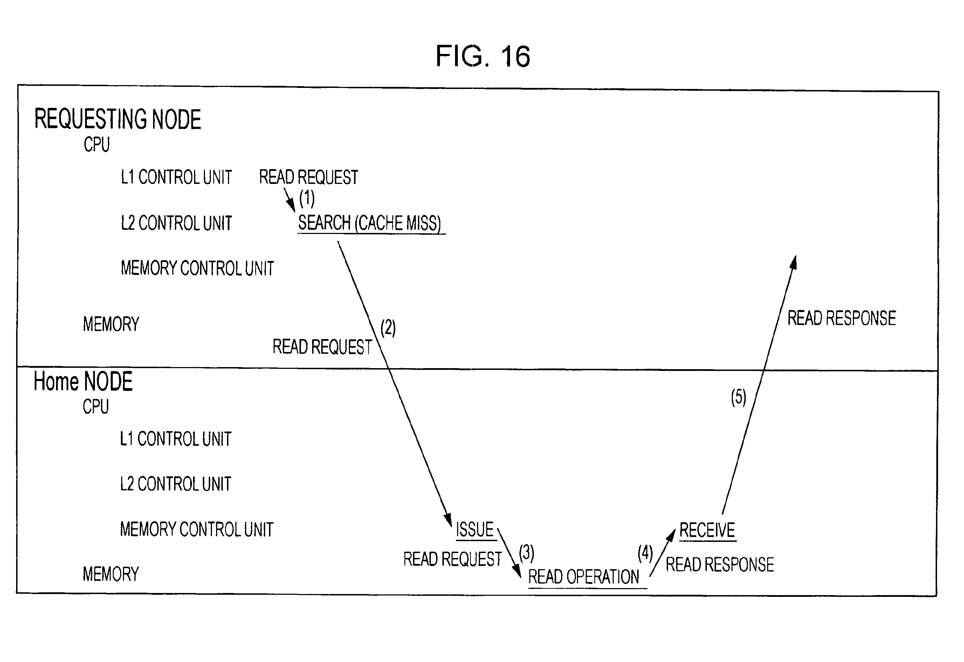

FIG. 16 is a diagram illustrating the process of accessing a remote memory provided in another node. In this case, (1) to (5) described below correspond to (1) to (5) illustrated in FIG. 16.

(1) In a requesting node, when data requested by the instruction execution unit 1501 does not exist in the L1 cache 1502, the L1 control unit 1503 issues a read request to the L2 control unit 1505. (2) The L2 control unit 1505 searches the L2 cache 1504 in response to the read request from the L1 control unit 1503. When the data requested by the L1 control unit 1503 does not exist in the L2 cache 1504, the L2 control unit 1505 issues a read request to a Home node via the memory control unit 1506. (3) In the Home node, the memory control unit 1506 issues a read request to a local memory provided in the Home node in response to the read request from the requesting node. (4) The local memory performs a read operation of reading data in response to the request from the memory control unit 1506. Then, the local memory issues a read response to the memory control unit 1506. Simultaneously, the local memory sends the read data to the memory control unit 1506. (5) The memory control unit 1506 issues a read response to the requesting node upon receiving the read response from the local memory. Simultaneously, the memory control unit 1506 sends the data read from the local memory to the requesting node.

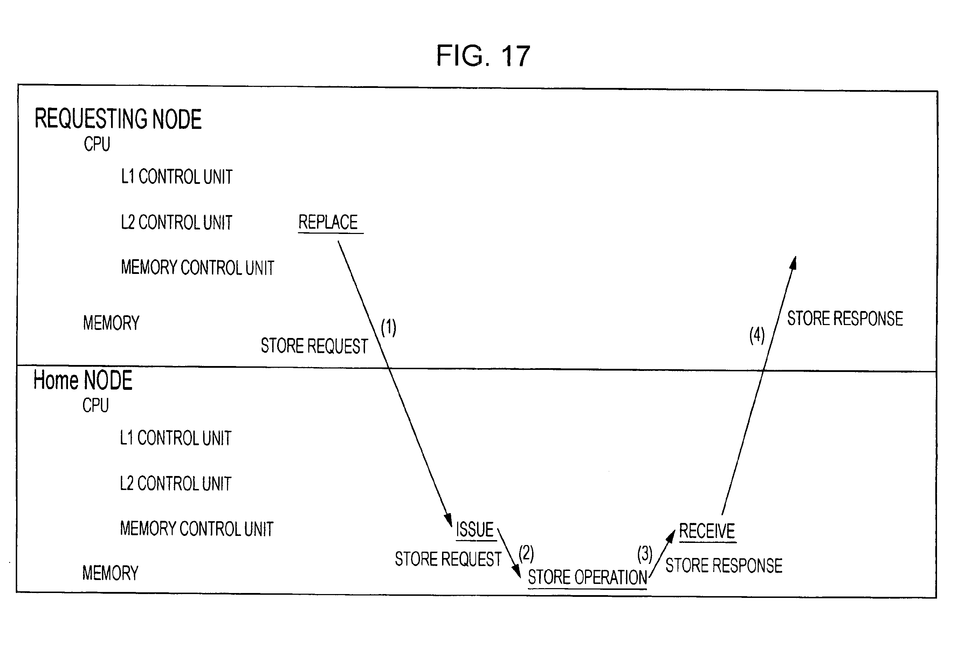

FIG. 17 is a diagram illustrating a replacement process. In this case, (1) to (4) described below correspond to (1) to (4) illustrated in FIG. 17.

(1) In the requesting node, when a replacement operation is performed, the L2 control unit 1505 issues, to the Home node, a store request to store data evicted from the L2 cache 1504 in a memory. (2) In the Home node, the memory control unit 1506 issues a store request to the local memory in response to the store request from the requesting node. Then, the local memory performs a store operation according to the request from the memory control unit 1506. That is, the local memory stores the data received from the requesting node at a predetermined address. (3) When the store operation is completed, the local memory issues, to the memory control unit 1506, a store response to the store request. (4) The memory control unit 1506 issues, to the requesting node, a store response to the store request upon receiving the store response from the local memory.

In association with the aforementioned techniques, a cache memory system the capacity of which can be increased, which is a virtual index/real tag cache with low associativity, and in which aliasing is allowed is known.

Moreover, a cache access control method for always performing optimal cache consistency control by dynamically determining an exclusive/shared area is known.

Moreover, a cache coherence control method in a shared memory processor in which snoop protocol is used is known.

In a shared memory information processing device, the communication distance in access to a remote memory connected to another node is long compared with the communication distance in access to a local memory connected to a local node, as described above. Thus, the delay time between the time of issuance of a request such as a read request and the time of return of the result of the request, i.e., latency, significantly increases.

Moreover, recently, LSIs have been connected to each other, using a throughput-oriented high-speed serial transfer bus. Thus, the latency required for transmission between LSIs significantly increases. Moreover, when a remote memory is accessed via a plurality of LSIs, the latency further increases.

For example, when a replacement operation is performed on data retrieved from a remote memory and stored in the L2 cache 1504 in a local node, invalidation of the data to be evicted by the replacement operation is performed, and an operation of writing back the data to a memory in the Home node is performed as necessary.

Thus, after the data retrieved from the remote memory is evicted from the L2 cache 1504 by the replacement operation, when the evicted data is re-accessed, a read operation of retrieving the data from the physically remote memory needs to be re-performed. Thus, when a physically remote memory exists in a system, the latency significantly increases.
Patent document 3 discloses a data processing system in accordance with the preamble of claim 1, including a processing unit, a distributed memory including a local memory and a remote memory having differing access latencies, and a cache coupled to the processing unit and to the distributed memory. The cache includes a congruence class containing a plurality of cache lines and a plurality of latency indicators that each indicate an access latency to the distributed memory low a respective one of the cache lines. The cache further includes a cache controller that selects a cache line in the congruence class as a castout victim in response to the access latencies indicated by the plurality or latency indicators.
Patent document 4 discloses a data processing apparatus having a memory access architecture which utilizes distributed shared-memory multiprocessors, and relates more particularly to a non-inclusive memory access mechanism in said architecture. The local memory in each node of shared memory is utilized as a backing store for blocks discarded from the processor cache to delay the address binding to the local memory until the blocks are discarded from the processor cache, thereby avoiding enforcement of the inclusion property and long latency due to the inclusion properly.

[Patent Document 1] Japanese Laid-open Patent Publication No. 10-105458
[Patent Document 2] Japanese Laid-open Patent Publication No. 2002-032265
[Patent document 3] United States Patent No. 6,408,362
[Patent document 4] United States Patent No. 5,937,431
[Non-Patent Document 1] "Real World Technologies, x86 Servers Brace for a Hurricane, HTTP://www.realworldtech.con/includes/templates/articles.cfm?ArticleID=RWT042405213553&mode=print"

Accordingly, it is desirable to provide a cache control unit that can improve latency that occurs when a remote memory is accessed.

A data processing system includes a plurality or nodes connected with each other, each or the nodes including a processor and a memory, each of the processors comprising: a processing unit for processing data stored in any of the memories; a cache memory for temporarily storing data to be processed by the processor; and a cache controller for controlling slaving or evacuating of data in the cache memory in accordance with an access history by the processor to data therein, characterised by a tag memory for storing tag information including node information and address information of the data stored in the cache memory in association therewith, wherein the cache controller is arranged to check if the data to be evacuated originated from the memory of its own node or from any other memory of any other node when evacuating data in the cache memory, and to store the data to be evacuated from the cache memory into the memory of its own node at a particular address of the memory and store information of the particular address in the tag memory as tag information such that the data stored in the particular address is made accessible by the processor in reference to the tag information when the data to be evacuated originated from any other memory of any other node.
In the drawings:

FIG. 1 is a diagram illustrating an example of the configuration of a system in which CPUs are used, each of the CPUs including a cache control unit according to the embodiment;

FIG. 2 is a diagram illustrating an example of the configuration of a system board SB0 illustrated in FIG. 1;

FIG. 3 is a diagram illustrating an exemplary configuration in a case where a cache control unit according to the embodiment is used in a CPU 0;

FIG. 4 is a diagram illustrating an example of the structure of a VL3 tag illustrated in FIG. 3;

FIG. 5 is a diagram illustrating the "registration status" of registration data;

Fig. 6 is a diagram illustrating the bit assignment of a tag registered in the VL3 tag;

FIG. 7 is a diagram illustrating the relationship between a memory MEMO and the VL3 tag;

FIG. 8 is a diagram illustrating the operational flow in a case where a replacement operation is performed in an L2 cache;

FIG. 9 is a diagram illustrating the flow of the process of reading data to be subjected to L2 replacement evicted from the L2 cache by a replacement operation;

FIG. 10 is a diagram illustrating the flow of the process of reading data that does not exist in an L1 cache, the L2 cache, and a VL3 cache;

FIG. 11 is a flowchart of cache control where a replacement operation is performed in the L2 cache;

FIG. 12 is a flowchart of cache control where a read request is issued from an instruction execution unit;

FIG. 13 is a flowchart of cache control where an invalidation request is received from a Home node;

FIG. 14 is a flowchart of cache control where a move-out request is received from a Home node;

FIG. 15 is a diagram illustrating caches in a CPU used in a shared memory information processing device;

FIG. 16 is a diagram illustrating the process of accessing a remote memory; and

FIG. 17 is a diagram illustrating a replacement process.

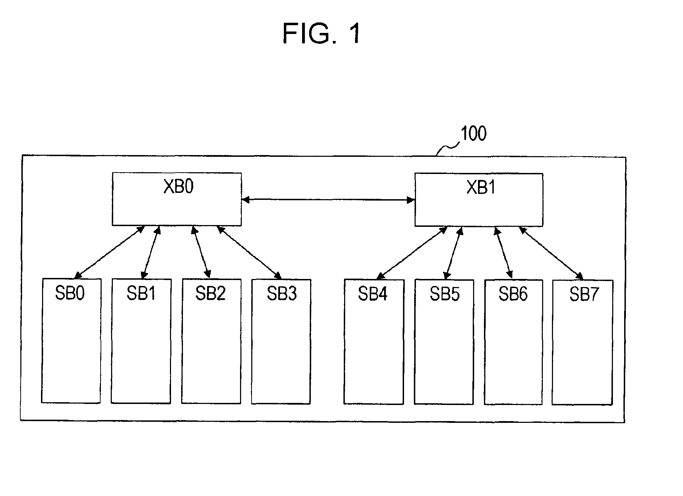

An embodiment of the present invention will now be described on the basis of FIGS. 1 to 14.

FIG. 1 is a diagram illustrating an information processing device in which CPUs are used, each of the CPUs including a cache control unit according to the embodiment.

An information processing device 100 illustrated in FIG. 1 includes a plurality of system boards SB0 to SB7 and crossbars XB0 and XB1. The system boards SB0 to SB7 includes CPUs. The information processing device 100 illustrated in FIG. 1 is a shared memory information processing device in which all the CPUs share a memory connected to each of the CPUs.

Hereinafter, it is assumed, for the sake of simplifying the description, that a single CPU belongs to one node. However, this may not be construed as limiting the present invention. In this case, a "node" represents an independent operation unit in which a predetermined memory is shared.

Each of the system boards SB0 to SB7 includes one or more CPUs. The system boards SB0 to SB3 are connected to the crossbar XB0 so that the system boards SB0 to SB3 and the crossbar XB0 can communicate with each other. Similarly, the system boards SB4 to SB7 are connected to the crossbar XB1 so that the system boards SB4 to SB7 and the crossbar XB1 can communicate with each other.

The crossbars XB0 and XB1 are connected to each other so that the crossbars XB0 and XB1 can communicate with each other.

In the aforementioned configuration, a CPU included in the system board SB0 can access a memory connected to a CPU included in the other system board, for example, the system board SB1, via the crossbar XB0. Similarly, a CPU included in the system board SB0 can access a memory connected to a CPU included in the system board SB4 via the crossbars XB0 and XB1.

FIG. 1 illustrates an embodiment of the information processing device 100. Thus, the configuration of the information processing device 100 is not limited to the configuration illustrated in FIG. 1. For example, the number of system boards, the number of crossbars, the types of connections between the individual components, the number of CPUs that belong to a node, and the like are not limited.

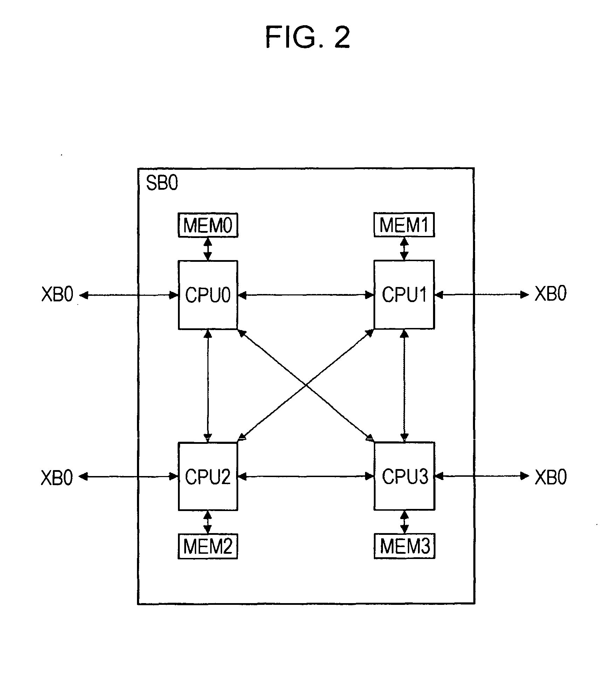

FIG. 2 is a diagram illustrating an example of the configuration of one of the system boards illustrated in FIG. 1. While, in the embodiment, only the system board SB0 will be described, the system boards SB I to SB7 have a configuration similar to that of the system board SB0.

The system board SB0 illustrated in FIG. 2 includes CPUs CPU0 to CPU3 and memories MEMO to MEM3 connected to one of the CPUs. Each of the memories MEMO to MEM3 connected to the CPUs is a volatile memory that is provided outside a CPU and stores data, programs etc., i.e., what is called a "main memory".

Below, a "main memory" is simply called a "memory" and is distinguished from a cache included in a CPU.

The CPUs 0 to 3 are connected to each other so that the CPUs 0 to 3 can communicate with each other. For example, the CPU 0 can access the memory MEM1 connected to the CPU 1. Moreover, the CPUs 0 to 3 are connected to the crossbar XB0 so that the CPUs 0 to 3 can communicate with the crossbar XB0. Thus, for example, the CPU 0 can access a memory connected to a CPU included in the system board SB1 via the crossbar XB0.

In the following description, a node to which a CPU to which a memory where predetermined data is stored is connected belongs is called a "Home node". In contrast, a node to which a CPU that retrieves data from a Home node and stores the data in a cache belongs is called a "requesting node".

Moreover, a memory connected to a CPU is called a "local memory", as viewed from the CPU. In contrast, a memory connected to a second CPU in a first node to which a first CPU belongs or a memory connected to a third CPU that belongs to a second node different from the first node to which the first CPU belongs, is called a "remote memory", as viewed from the first CPU.

For example, as viewed from the CPU 0, the memory MEMO is a local memory. Moreover, as viewed from the CPU 0, the memories MEM1 to MEM3 and memories connected to CPUs included in the system boards SB1 to SB7 are remote memories.

FIG. 2 illustrates an embodiment of the system board SB0. Thus, the configuration of the system board SB0 is not limited to the configuration illustrated in FIG. 2. For example, the number of CPUs and the number of memories included in the system board SB0 and the like are not limited. A data processing system includes a plurality of nodes connected with each other, each of the nodes including a processor and a memory.

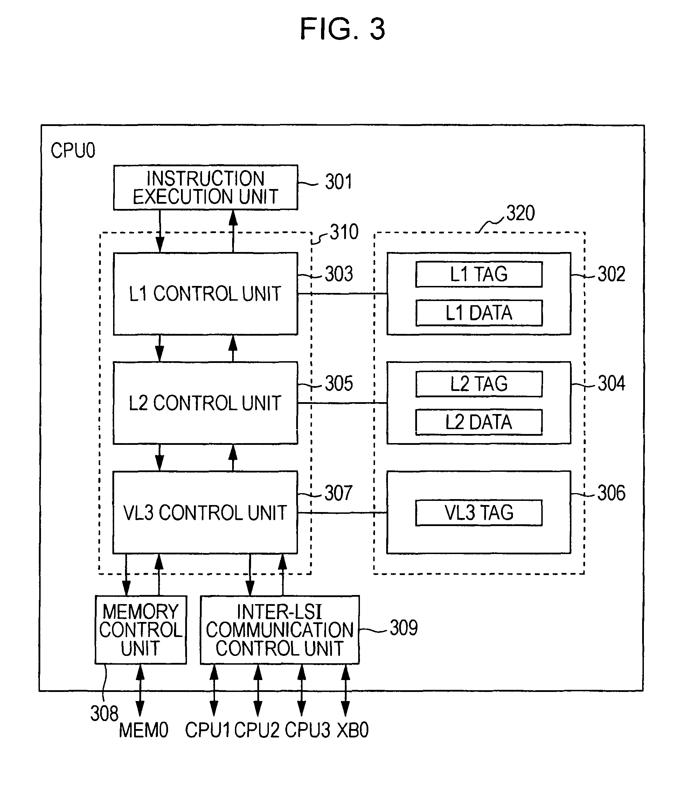

FIG. 3 is a diagram illustrating an exemplary configuration in a case where a cache control unit according to the embodiment is used in a CPU. While, in the embodiment, the CPU 0 will be exemplified, the other CPUs 1 to 3 included in the system board SB0 and CPUs included in the system boards SB1 to SB7 have a configuration similar to that of the CPU 0.

The CPU 0 includes an instruction execution unit 301, an L1 cache 302, an L1 control unit 303, an L2 cache 304, an L2 control unit 305, a VL3 cache 306, a VL3 control unit 307, a memory control unit 308, and an inter-LSI communication control unit 309.

A cache control unit 310 according to the embodiment includes the respective functions of the L1 control unit 303, the L2 control unit 305, and the VL3 control unit 307.

A cache unit 320 according to the embodiment includes the L1 cache 302, the L1 control unit 303, the L2 cache 304, the L2 control unit 305, the VL3 cache 306, and the VL3 control unit 307.

The cache unit 320 stores data and the like used in the instruction execution unit 301. The cache control unit 310 performs control such as storing or reading data in or from the cache unit 320 as necessary.

The instruction execution unit 301 executes program instructions loaded into the local memory MEMO. Moreover, the instruction execution unit 301 sends a read request, a store request, and the like to the L1 control unit 303 as necessary.

The L1 cache 302 is a primary cache provided in the CPU 0. The L1 cache 302 stores an L1 tag and L1 data. The L1 data is a data group stored in the L1 cache 302. The L1 tag is a management information group for managing data stored in the L1 cache 302.

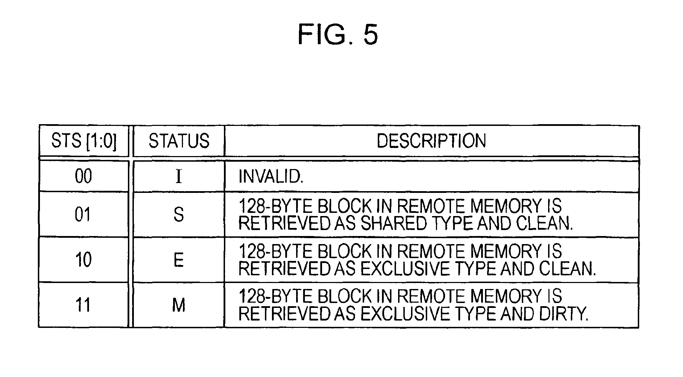

A tag is management information for managing data stored in a cache. The management information includes, for example, a physical address in the local memory where data is stored and the registration status of the data. The registration status of data will be illustrated in FIG. 5 described below.

The L1 control unit 303 controls the L1 cache 302. For example, the L1 control unit 303 stores data retrieved from the local memory in the L1 cache 302. The L1 control unit 303 further registers, in the L1 tag, a tag in which ECC check bits are added to data that includes a physical address in the local memory where the L1 data is stored and data indicating the registration status of the L1 data.

The L2 cache 304 is a secondary cache provided in the CPU 0. The L2 cache 304 stores an L2 tag and L2 data. The L2 data is a data group stored in the L2 cache 304. The L2 tag is a management information group for managing data stored in the L2 cache 304.

The L2 control unit 305 controls the L2 cache 304. For example, the L2 control unit 305 stores data retrieved from the local memory in the L2 cache 304. The L2 control unit 305 further registers, in the L2 tag, a tag in which ECC check bits are added to data that includes a physical address in the local memory where the L2 data is stored and data indicating the registration status of the L2 data.

The VL3 cache 306 is a cache that virtually implements a tertiary cache. The VL3 cache 306 stores a VL3 tag. The VL3 tag is a management information group for managing data stored in a tertiary cache that is virtually provided in the CPU 0.

The VL3 control unit 307 virtually implements a tertiary cache, using the VL3 cache 306 and the local memory MEMO.

For example, a case where data read from a remote memory is evicted from the L2 cache 304 by a replacement operation will be considered.

In this case, the VL3 control unit 307 stores the data evicted from the L2 cache 304 by the replacement operation at a predetermined address in the local memory MEMO assigned to a virtual cache space. The VL3 control unit 307 further registers, in the VL3 tag, a tag that includes ECC check bits and data indicating an address in a remote memory where the data stored in the local memory MEMO is stored and indicating the registration status of the data stored in the local memory MEMO in the cache.

A "replacement operation" represents an operation of evicting old data from a cache so as to store new data. Old data is assumed to include data including only a tag. Moreover, a replacement operation performed in the L2 cache is called an "L2 replacement operation". Moreover, data to be evicted from the L2 cache by an L2 replacement operation is called "data to be subjected to L2 replacement".

A tag is registered in the VL3 tag when a replacement operation is performed on the L2 cache 304 and when data to be replaced is data retrieved from a remote memory.

The memory control unit 308 accesses the local memory MEMO in response to a request from, for example, the VL3 control unit 307.

For example, upon receiving a read request from the VL3 control unit 307, the memory control unit 308 reads data from a predetermined address in the local memory MEMO and outputs the data to the VL3 control unit 307. Moreover, upon receiving a store request from the VL3 control unit 307, the memory control unit 308 stores data to be stored in the local memory MEMO.

The inter-LSI communication control unit 309 accesses a remote memory in response to a request from, for example, the VL3 control unit 307.

For example, the inter-LSI communication control unit 309 in the CPU 0 accesses the memory connected to the CPU 1. Moreover, for example, the inter-LSI communication control unit 309 accesses a memory connected to a CPU included in the system board SB1 via the crossbar XB0.

In the embodiment, it is assumed that cache coherence control according to the cache-coherent NonUniform Memory Access (ccNUMA) method is performed so as to maintain consistency among caches included in each node, in the case in FIG. 3, the L1 cache 302, the L2 cache 304, and the VL3 cache 306.

CPU includes a processing unit for processing data stored in any of the memory, a cache memory for temporarily storing data to be processed by the processor, a tag memory for storing tag information including node information and address information of the data stored in the cache memory in association therewith, the processor accessing data to be processed, when available, in the tag memory in reference to the tag information, and a cache controller for controlling saving or evacuating of data in the cache memory in accordance with the history of access by the processor to respective data, the cache controller, when evacuating data in the cache memory, checking if the data to be evacuated originated from the memory of its own node or from any other memory of any other node, and when the data to be evacuated originated from any other memory of any other node, storing the data to be evacuated from the cache memory into the memory of its own node at a particular address of the memory and storing information of the particular address in the tag memory as tag information such that the data stored in the particular address is made accessible by the processor in reference to the tag information.

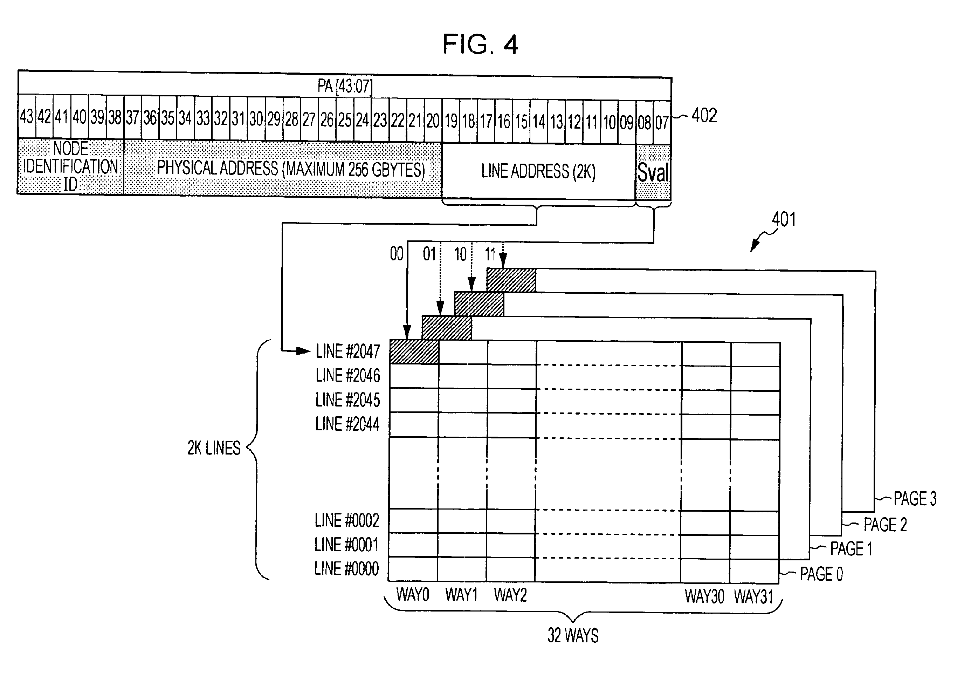

FIG. 4 is a diagram illustrating an example of the structure of the VL3 tag illustrated in FIG. 3.

A VL3 tag 401 illustrated in FIG. 4 is used to virtually implement a tertiary cache with a storage capacity of 32 Mbytes (= 128 Bytes x 4 val(value) x 2K lines x 32 ways) described below.
(1) Line size: 128 Bytes
(2) Number of pages: 4
(3) Number of lines: 2K (= 2 x 1024)
(4) Data storage structure: 32-way set associative

The VL3 tag 401 according to the embodiment has a data storage structure of 40 bits x 2K lines x 32 ways, i.e., a 32-way set associative data storage structure that includes 2K (= 2 x 1024) lines each of which includes 40 bits. A tag is registered in each line. Hereinafter, data a tag of which has been registered in the VL3 tag 401 or data a tag of which is to be registered in the VL3 tag 401 is called "registration data".

Bit assignment 402 illustrated in FIG. 4 illustrates a main part of address data PA specified when a tertiary cache that is virtually provided is accessed.

The bit assignment 402 illustrated in FIG. 4 illustrates the bit assignment of a physical address space, assuming that the size of a real memory space per node is 256 Gbytes, and the maximum number of nodes is 64.

Bits [43:38] correspond to a node identification ID for identifying a node. A node identification ID indicates a node to which a memory that stores registration data belongs. Moreover, bits [37:20] correspond to a physical address in a memory that stores registration data.

Bits [19:09] correspond to a line address at which a tag is registered. Moreover, bits [08:07] correspond to a value (Sval: Select value) that indicates a page in which a tag is registered. For example, when bits [08:07] are "00 (binary)", the VL3 control unit 307 selects, as a way for registering a tag, a way at a line address indicated by bits [19:09] of the address data PA in a page 0, as illustrated in FIG. 4. Then, the VL3 control unit 307 registers a tag in the selected way for registering a tag.

In this case, a way for registering a tag may be determined, using, for example, the Least Recently Used (LRU) algorithm.

A tag registered in the VL3 tag 401 is data that includes bits [43:20], data SVAL [7:0] indicating the registration status of registration data, and ECC check bits ECC [6:0] of the address data PA.

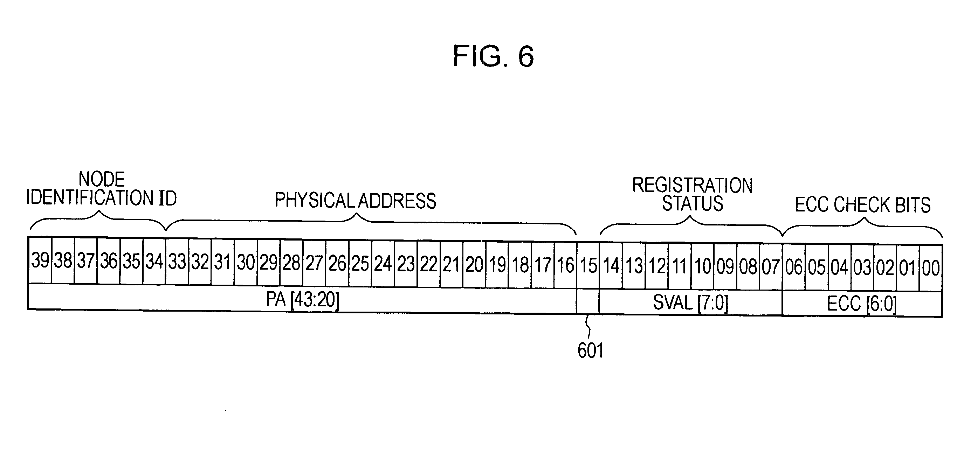

SVAL [7:0] and ECC [6:0] will be described in FIG. 6.

In the embodiment, the status of registration data in a cache, the registration data being stored at an address indicated by bits [43:20] of the address data PA, is called a "registration status". Moreover, ECC check bits are those for protecting data of bits [43:20] and data SVAL [7:0] indicating a registration status of the address data PA.

FIG. 4 illustrates an embodiment of the VL3 tag 401. Thus, FIG. 4 does not limit the line size, the number of lines, the number of ways, or the like.

FIG. 5 is a diagram illustrating the "registration status" of registration data.

The "registration status" of registration data is determined according to the Modified/Exclusive/Shared/Invalid (MESI) protocol. Statuses defined according to the MESI protocol are expressed by 2-bit data STS [1:0].

When STS [1:0] is "00 (binary)", this indicates that the status of registration data is I. In the status I, registration data is invalid.

When STS [1:0] is "01 (binary)", this indicates that the status of registration data is S. In the status S, data in a cache retrieved from a remote memory as shared type data is clean.

The "clean" status of data represents a status in which data stored in a remote memory matches data read from the remote memory and stored in a cache.

When STS [1:0] is "10 (binary)", this indicates that the status of registration data is E. In the status E, registration data retrieved from a remote memory as exclusive type data is clean.

When STS [1:0] is "11 (binary)", this indicates that the status of registration data is M. In the status M, registration data retrieved from a remote memory as exclusive type data is dirty.

"dirty" status is a status in which data stored in a remote memory does not match data read from the remote memory and stored in a cache because the data stored in the remote memory or the cache has been updated.

FIG. 6 is a diagram illustrating the bit assignment of a tag stored in the VL3 tag. A tag 601 is 40-bit width data. The data of bits [43:20] of the address data PA is stored in bits [39:16] of the tag 601.

The data of STS [1:0] indicating a registration status MESI is stored in bits [14:07] of the tag 601. For example, bits [14:13], [12:11], [10:09], and [08:07] of the tag 601 are areas in which the status I, the status S, the status E, and the status M are set, respectively.

When the value of STS [1:0] indicates the status I, the value of STS [1:0] is set to bits [14:13] of the tag 601. When the value of STS [1:0] indicates the status S, the value of STS [1:0] is set to bits [12:11] of the tag 601. When the value of STS [1:0] indicates the status E, the value of STS [1:0] is set to bits [10:09] of the tag 601. When the value of STS [1:0] indicates the status M, the value of STS [1:0] is set to bits [08:07] of the tag 601.

In this case, bits [14:13], [12:11], [10:09], and [08:07] of the tag 601 need to be initialized so as to make it clear that the value of STS [1:0] is set.

ECC check bits for bits [39:07] of the tag 601 are stored in bits [06:00] of the tag 601. A bit [15] of the tag 601 is a reserved area.

In the embodiment, tags having the same bit assignment as the tag illustrated in FIG. 6 are used as tags registered in the L1 tag and tags registered in the L2 tag.

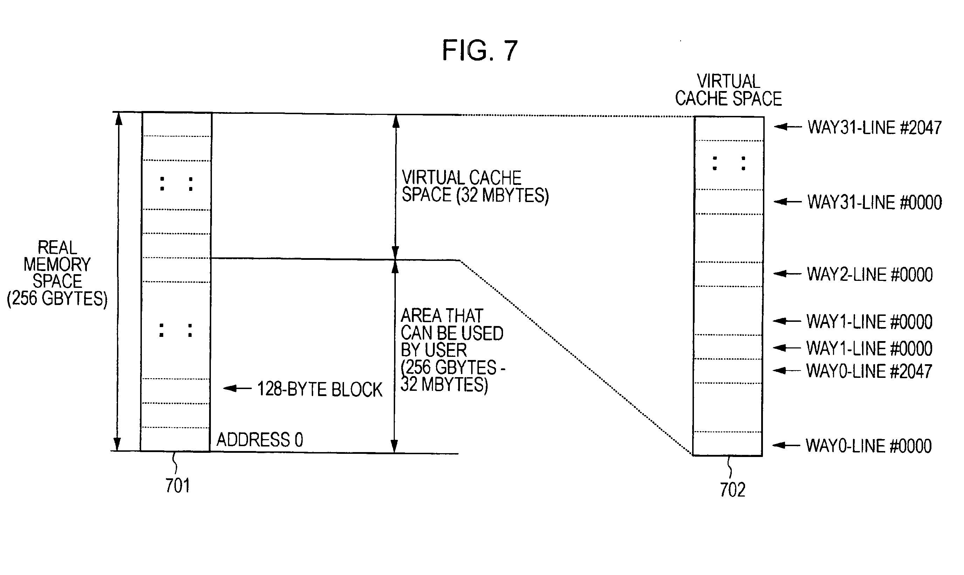

FIG. 7 is a diagram illustrating the relationship between the local memory MEMO and the VL3 tag. In other nodes, the same relationship applies to the local memory and the VL3 tag.

A real memory space 701 is the memory space of the local memory MEMO. The real memory space 701 is managed in units of 128-Byte blocks. A low-order 32-Mbyte area of the real memory space 701 is assigned to a virtual cache space. The other area is an area that can be used by a user.

A virtual cache space 702 is the memory space of the VL3 tag. The virtual cache space 702 is managed in units of 40-bit blocks. Tags registered in WAYO-line #0000 to WAY31-line #2047 illustrated in FIG. 4 are stored in the individual blocks.

The individual blocks in the virtual cache space 702 are in association with the blocks in the real memory space 701 assigned to the virtual cache space. For example, registration data is stored at a physical address in the real memory space 701 indicated by bits [33:16] of a tag stored in the virtual cache space 702.

In cache control according to the embodiment, when data read from a remote memory and stored in the L2 cache 304 is evicted by a replacement operation, the evicted data is stored in a tertiary cache that is virtually provided in a position subordinate to the L2 cache 304.

The outline of the cache control according to the embodiment will now be described.

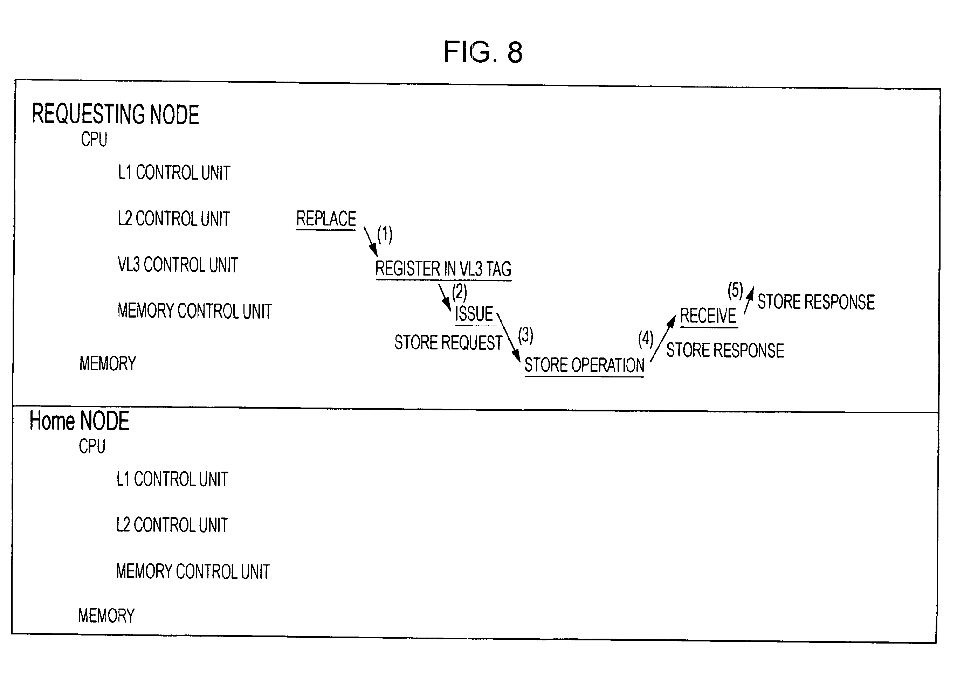

FIG. 8 is a diagram illustrating the operational flow in a case where a replacement operation is performed in the L2 cache 304. In this case, (1) to (5) described below correspond to (1) to (5) illustrated in FIG. 8.

(1) In a requesting node, when a replacement operation is performed, the L2 control unit 305 outputs, to the VL3 control unit 307, data to be subjected to L2 replacement evicted by the replacement operation. (2) Upon receiving the data to be subjected to L2 replacement from the L2 control unit 305, the VL3 control unit 307 registers a tag of the data to be subjected to L2 replacement in the VL3 tag. The VL3 control unit 307 further issues, to the memory control unit 308, a store request to store the data to be subjected to L2 replacement at a predetermined address in a local memory assigned to a virtual cache space. (3) The memory control unit 308 issues, to the local memory ("memory" in the drawing), a store request to store the data to be subjected to L2 replacement at the predetermined address. Simultaneously, the memory control unit 308 sends the data to be subjected to L2 replacement to the local memory. The local memory performs an operation of storing the data to be subjected to L2 replacement. That is, in response to the request from the memory control unit 308, the local memory stores the data to be subjected to L2 replacement received, together with the store request, from the memory control unit 308 at the predetermined address. (4) When the store operation is completed, the local memory issues, to the memory control unit 308, a store response indicating that the store operation is completed. (5) Upon receiving the store response from the local memory, the memory control unit 308 issues a store response to the VL3 control unit 307.

In the aforementioned process, the data to be subjected to L2 replacement evicted by the replacement operation is stored in the virtually provided tertiary cache.

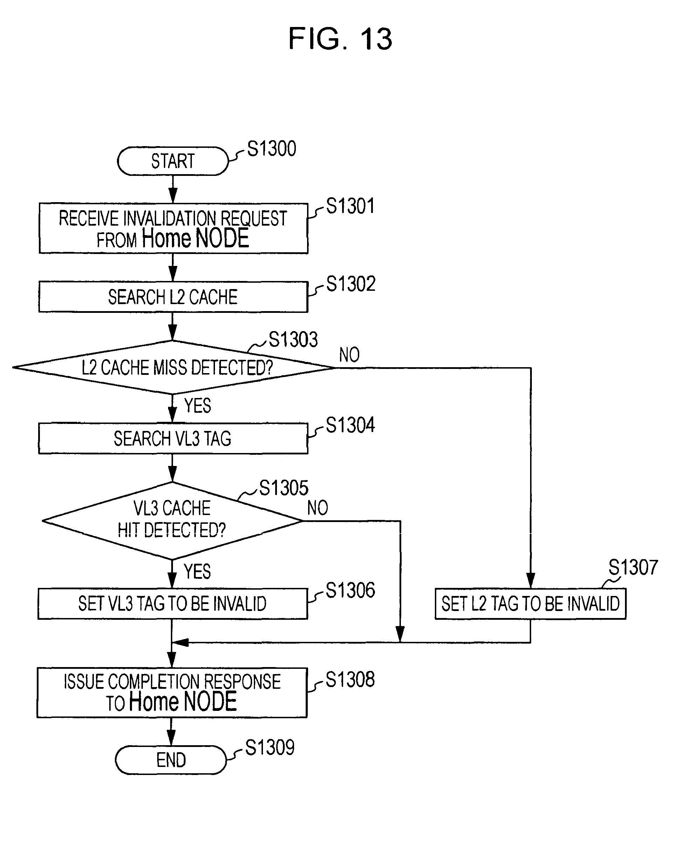

When data to be subjected to L2 replacement, a tag of the data being registered in the VL3 tag, is changed by executing access for a store operation in a Home node, the Home node sends a request to invalidate the data to the requesting node. In this case, the requesting node invalidates the tag of the data to be subjected to L2 replacement registered in the VL3 tag by a process described below illustrated in FIG. 13.

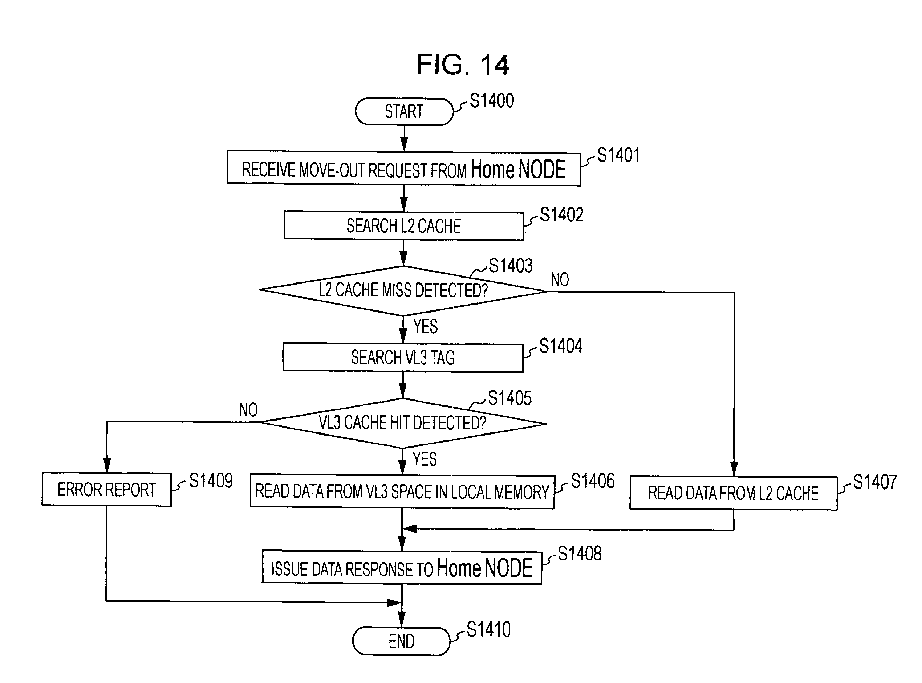

Moreover, in a case where data to be subjected to L2 replacement is data retrieved as exclusive type data, when, in the Home node, the data to be subjected to L2 replacement has been accessed by a device, the Home node sends a request to move out data to the requesting node. In this case, the requesting node sends the data to be subjected to L2 replacement to the Home node by a process illustrated in FIG. 14. Simultaneously, the requesting node invalidates a tag of the data to be subjected to L2 replacement registered in the VL3 tag.

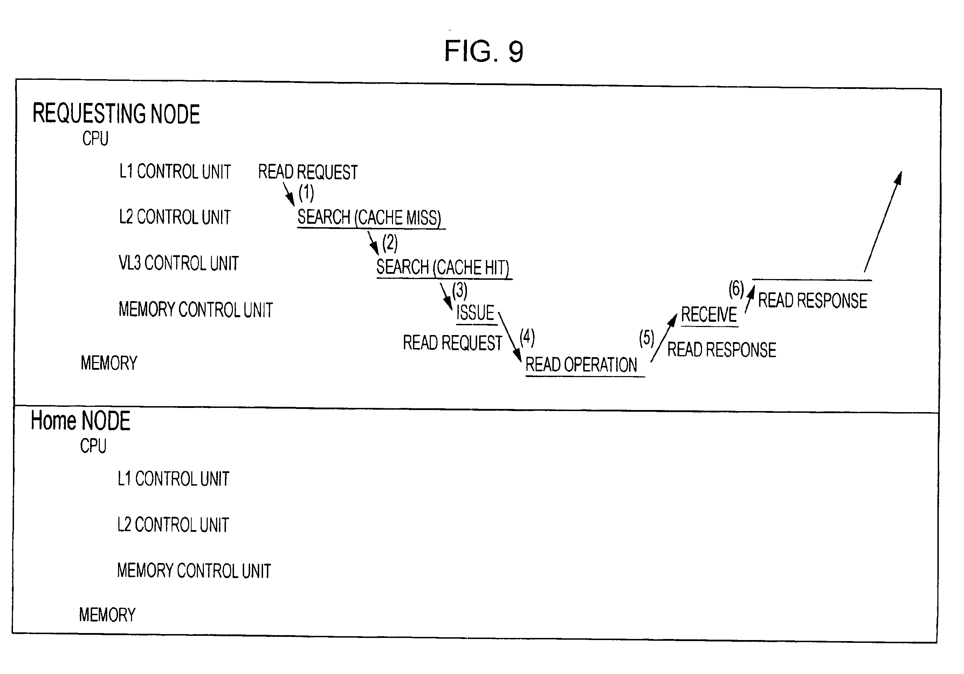

FIG. 9 is a diagram illustrating the flow of the process of reading data to be subjected to L2 replacement evicted from the L2 cache 304 by a replacement operation. In this case, (1) to (6) described below correspond to (1) to (6) illustrated in FIG. 9.

(1) When data requested by the instruction execution unit 301 does not exist in the L1 cache 302, the L1 control unit 303 issues a read request to the L2 control unit 305. Hereinafter, data subjected to a read request is called "data to be read". (2) Upon receiving the read request from the L1 control unit 303, the L2 control unit 305 searches the L2 tag. Then, the L2 control unit 305 determines whether a tag of the data to be read is registered in the L2 tag. Upon detecting a cache miss, the L2 control unit 305 issues a read request to the VL3 control unit 307. (3) Upon receiving the read request from the L2 control unit 305, the VL3 control unit 307 searches the VL3 tag. Then, the VL3 control unit 307 determines whether a tag of the data to be read is registered in the VL3 tag. Upon detecting a cache hit, the VL3 control unit 307 issues a read request to the memory control unit 308. (4) Upon receiving the read request from the VL3 control unit 307, the memory control unit 308 issues a read request to the local memory. (5) In response to the read request from the memory control unit 308, the local memory performs a read operation of reading the data to be read from a predetermined address. Then, the local memory issues, to the memory control unit 308, a read response indicating that the read operation is completed. Simultaneously, the local memory sends the read data to the memory control unit 308. (6) The memory control unit 308 issues a read response to the VL3 control unit 307. Simultaneously, the memory control unit 308 sends, to the VL3 control unit 307, the data to be read received from the local memory.

The data to be read sent to the VL3 control unit 307 is sent to the instruction execution unit 301 via the L2 control unit 305 and the L1 control unit 303.

At this time, the L1 control unit 303 registers, in the L1 tag, a tag of the data to be read sent from the VL3 control unit 307 and stores the data to be read in the L1 data. Similarly, the L2 control unit 305 registers, in the L2 tag, a tag of the data to be read sent from the VL3 control unit 307 and stores the data to be read in the L2 data.

In the embodiment, data stored in the L1 cache 302 and the L2 cache 304 and data stored in the VL3 cache 306 are exclusively controlled. Thus, when data registered in the VL3 cache 306 is registered in the L1 cache 302 and the L2 cache 304, the VL3 control unit 307 invalidates the data registered in the VL3 cache 306 so as to maintain consistency among the caches.

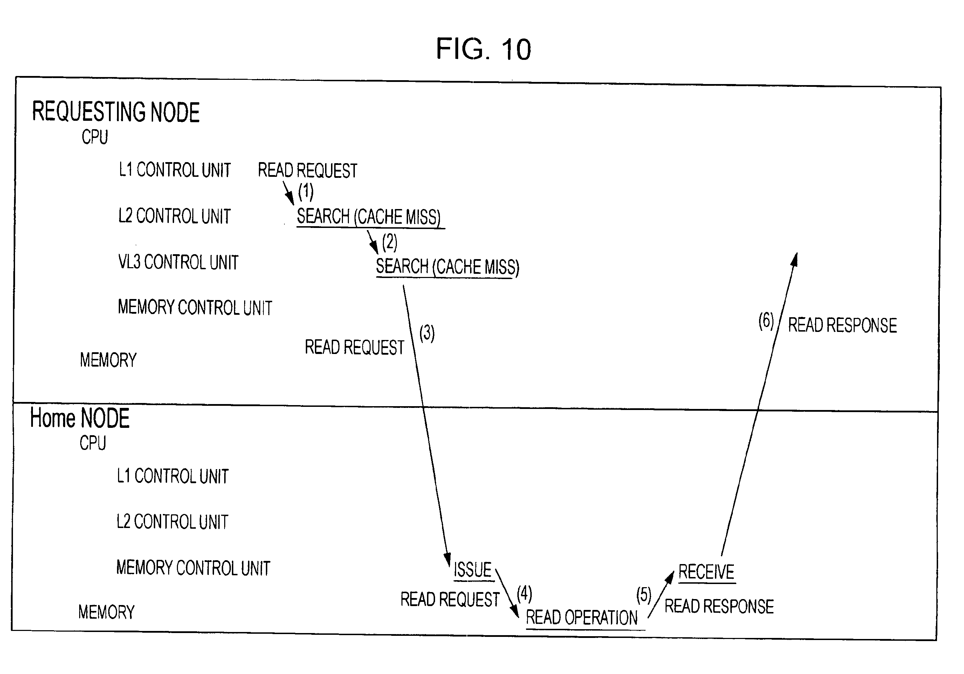

FIG. 10 is a diagram illustrating the flow of the process of reading data that does not exist in the L1 cache 302, the L2 cache 304, and the VL3 cache 306. In this case, (1) to (6) described below correspond to (1) to (6) illustrated in FIG. 10.

(1) In the requesting node, when data requested by the instruction execution unit 301 does not exist in the L1 cache 302, the L1 control unit 303 issues a read request to the L2 control unit 305. (2) Upon receiving the read request from the L1 control unit 303, the L2 control unit 305 searches the L2 tag. Then, the L2 control unit 305 determines whether a tag of the data to be read is registered in the L2 tag. Upon detecting a cache miss, the L2 control unit 305 issues a read request to the VL3 control unit 307. (3) Upon receiving the read request from the L2 control unit 305, the VL3 control unit 307 searches the VL3 tag. Then, the VL3 control unit 307 determines whether a tag of the data to be read is registered in the VL3 tag. Upon detecting a cache miss, the VL3 control unit 307 determines the Home node from the address data PA specified in the read request. The Home node can be determined from bits [43:38] of the bit assignment 402 illustrated in FIG. 4, i.e., a node identification ID. Upon determining the Home node, the VL3 control unit 307 issues a read request to the determined Home node. (4) Upon receiving the read request from the VL3 control unit 307 in the requesting node, a memory control unit in the Home node issues a read request to a local memory. (5) In response to the read request from the memory control unit in the Home node, the local memory performs a read operation of reading the data to be read stored at an address to be subjected to a read operation. Then, the local memory issues a read response to the memory control unit in the Home node. Simultaneously, the local memory sends the read data to the memory control unit in the Home node. (6) Upon receiving the read response from the local memory, the memory control unit in the Home node issues a read response to the requesting node. Simultaneously, the memory control unit in the Home node sends, to the requesting node, the data to be read received from the local memory.

In the requesting node, the VL3 control unit 307 receives the data to be read sent from the memory control unit in the Home node. The data to be read received by the VL3 control unit 307 is sent to the instruction execution unit 301 via the L2 control unit 305 and the L1 control unit 303.

At this time, the L1 control unit 303 registers, in the L1 tag, a tag of the data to be read sent from the VL3 control unit 307 and stores the data to be read in the L1 data. Similarly, the L2 control unit 305 registers, in the L2 tag, a tag of the data to be read and stores the data to be read in the L2 data.

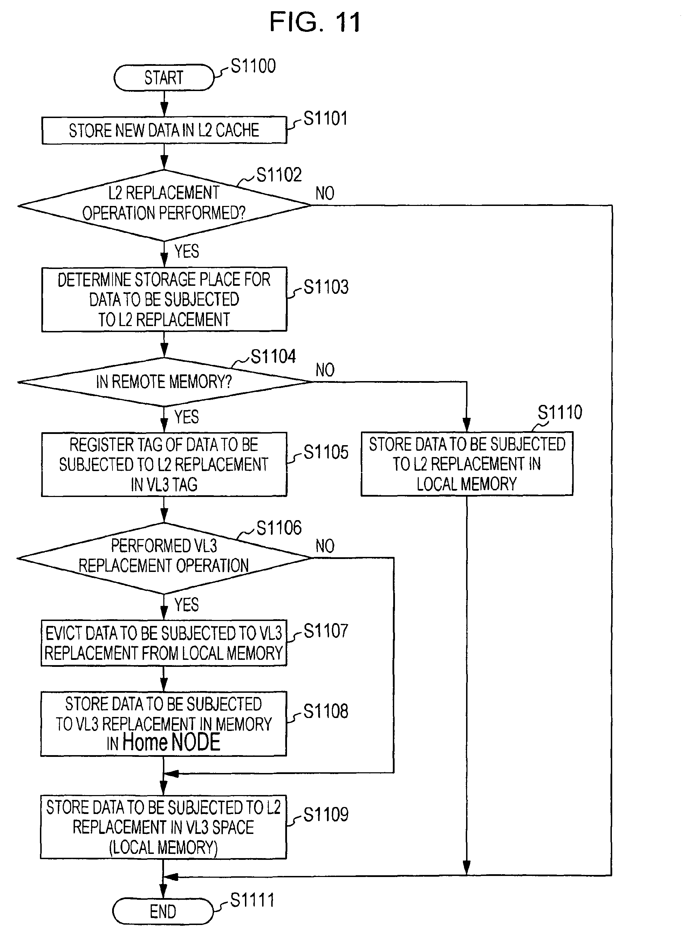

FIG. 11 shows cache control in a case where a replacement operation is performed in L2 cache 304.

For example, the process in FIG. 11 is started by the L1 control unit 303 issuing, to the L2 control unit 305, a request to store data requested to be stored by the instruction execution unit 301 (step S1100).

In step S1101, the L2 control unit 305 determines whether an area for storing the new data indicated by the L1 control unit 303 is available in the L2 cache 304, depending on whether an area for registering a new tag is available in the L2 tag.

When no area for storing the new data indicated by the L1 control unit 303 is available in the L2 cache 304, the L2 control unit 305 performs an L2 replacement operation. When a predetermined area has been reserved in the L2 cache 304 by the L2 replacement operation, the L2 control unit 305 registers a tag of the new data indicated by the L1 control unit 303 in the L2 tag. The L2 control unit 305 further stores the new data indicated by the L1 control unit 303 in the area of the L2 cache 304 reserved by the L2 replacement operation.

On the other hand, when an area for storing the new data indicated by the L1 control unit 303 is available in the L2 cache 304, the L2 control unit 305 registers a tag of the new data indicated by the L1 control unit 303 in the L2 tag without performing an L2 replacement operation. The L2 control unit 305 further stores the new data indicated by the L1 control unit 303 in the L2 cache 304.

In step S1102, the L2 control unit 305 determines whether an L2 replacement operation has been performed in step S1101.

When an L2 replacement operation has been performed in step S1101, the L2 control unit 305 causes the process to proceed to step S1103 (S1102 YES). When L2 replacement has not been performed in step S1101, the L2 control unit 305 causes the process to proceed to step S1111 and completes the process in FIG. 11 (S1102 NO).

In step S1103, the L2 control unit 305 determines, from a tag of data to be subjected to L2 replacement evicted from the L2 cache 304 by the L2 replacement operation, a storage place for storing the data to be subjected to L2 replacement.

For example, the L2 control unit 305 determines the Home node of the data to be subjected to L2 replacement from the tag of the data to be subjected to L2 replacement. The Home node can be determined from bits [39:34] of the tag 601 illustrated in FIG. 6, i.e., bits [43:38] of the bit assignment 402 illustrated in FIG. 4.

In step S 1104, when the Home node does not match a local node, the L2 control unit 305 determines that the data to be subjected to L2 replacement is stored in a remote memory (S1104 YES). In this case, the L2 control unit 305 causes the process to proceed to step S1105.

When the Home node matches the local node, the L2 control unit 305 determines that the data to be subjected to L2 replacement is stored in a local memory (S1104 NO). In this case, the L2 control unit 305 causes the process to proceed to step S1110.

In step S1105, the VL3 control unit 307 registers a tag of the data to be subjected to L2 replacement in the VL3 tag by the following operations. In this case, the registration status (M/E/S) of the data to be subjected to L2 replacement in the L2 cache 304 is directly inherited.

The VL3 control unit 307 first determines whether an area for storing the tag of the data to be subjected to L2 replacement is available in the VL3 tag.

When no area for registering the tag of the data to be subjected to L2 replacement is available in the VL3 tag, the VL3 control unit 307 performs a replacement operation of evicting an old tag registered in the VL3 tag from the VL3 cache 306.

Hereinafter, a replacement operation performed in the VL3 cache is called a "VL3 replacement operation". Moreover, data to be evicted from the VL3 cache in a VL3 replacement operation is called "data to be subjected to VL3 replacement".

When a predetermined area has been reserved in the VL3 tag in the VL3 cache 306 by the VL3 replacement operation, the VL3 control unit 307 registers the tag of the data to be subjected to L2 replacement in the reserved area.

When an area for storing the tag of the data to be subjected to L2 replacement is available in the VL3 tag, the VL3 control unit 307 registers the tag of the data to be subjected to L2 replacement in the VL3 tag without performing a VL3 replacement operation.

In step S1106, the VL3 control unit 307 determines whether a VL3 replacement operation has been performed in step S 1105.

When a VL3 replacement operation has been performed in step S1105, the VL3 control unit 307 causes the process to proceed to step S1107 (S1106 YES). When a VL3 replacement operation has not been performed in step S1105, the VL3 control unit 307 causes the process to proceed to step S1109 (S1106 NO).

In step S1107, the VL3 control unit 307 evicts data to be subjected to VL3 replacement from a predetermined address in the local memory assigned to the virtual cache space.

For example, the VL3 control unit 307 refers to a tag of the data to be subjected to VL3 replacement, the tag being registered in the VL3 tag. Then, the VL3 control unit 307 retrieves, from bits [33:16] of the tag, a physical address in the local memory at which the data to be subjected to VL3 replacement is stored. Then, the VL3 control unit 307 reads the data to be subjected to VL3 replacement from the local memory via the memory control unit 308.

In step S1108, the VL3 control unit 307 issues, to a Home node determined from the tag of the data to be subjected to VL3 replacement, a store request to store the data to be subjected to VL3 replacement read in step S1107. Simultaneously, the VL3 control unit 307 sends the data to be subjected to VL3 replacement to the determined Home node.

In the Home node, when the data to be subjected to VL3 replacement has been received via an inter-LSI communication control unit, a VL3 control unit in the Home node stores the data to be subjected to VL3 replacement at a predetermined address in a local memory in the Home node.

In the aforementioned operations in steps S1107 and S1108, the VL3 control unit 307 reserves an area by evicting the data to be subjected to VL3 replacement from the virtually provided tertiary cache, i.e., the local memory assigned to the virtual cache space.

In step S1109, the VL3 control unit 307 stores the data to be subjected to L2 replacement evicted from the L2 cache 304 by the L2 replacement operation in step S1101 at a predetermined address in the local memory assigned to the virtual cache space.

When a VL3 replacement operation has been performed in step S1105, the VL3 control unit 307 stores the data to be subjected to L2 replacement in the area reserved by the operations in steps S1107 and S1108.

On the other hand, in step S1110, the VL3 control unit 307 stores the data to be subjected to L2 replacement at a predetermined address in the local memory.

After the operation in step S1109 or S1110 is completed, the VL3 control unit 307 refers to bits [15:07] of the tag of the data to be subjected to L2 replacement. Then, the VL3 control unit 307 determines the registration status of the data to be subjected to L2 replacement.

When the registration status of the data to be subjected to L2 replacement is M, the VL3 control unit 307 reads the data to be subjected to L2 replacement from a predetermined address in the local memory assigned to the virtual cache space. Then, the VL3 control unit 307 issues a request to store the read data to be subjected to L2 replacement to the Home node.

When the registration status of the data to be subjected to L2 replacement is E or M, the VL3 control unit 307 notifies the Home node of completion of replacement operation to maintain consistency among the caches.

The VL3 control unit 307 proceeds to step S 1111 and completes the process (step S1111).

In this case, in step S1105, only clean data, i.e., data the registration status of which is E or S, may be registered in the VL3 tag. In this arrangement, a VL3 replacement can be simplified. In this case, when data to be subjected to replacement is dirty, the operations in steps S1107 and S1108 need to be performed without fail.

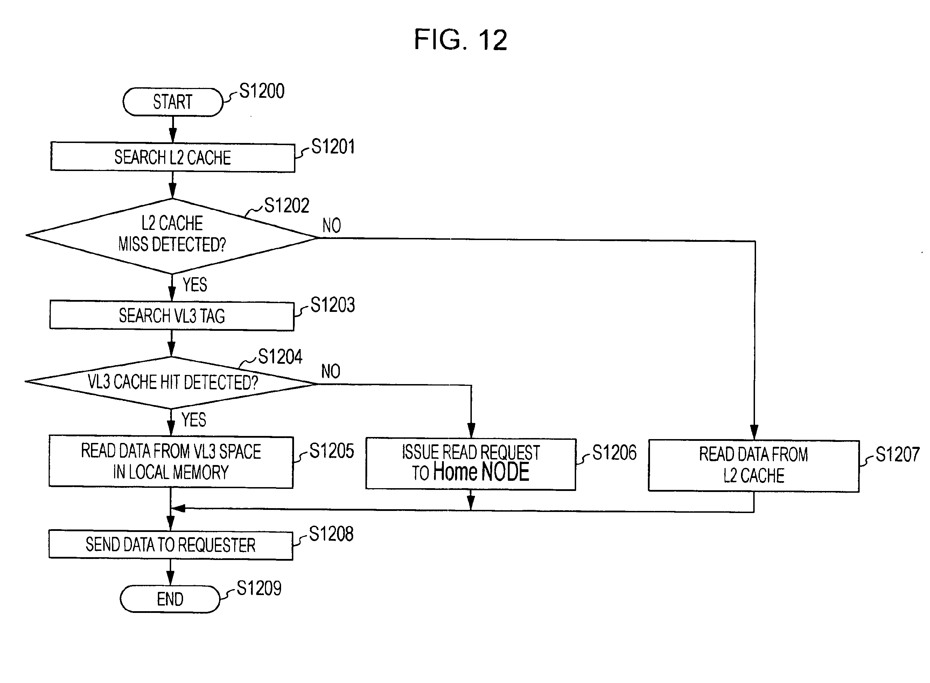

FIG. 12 shows cache control where a read request is issued from the instruction execution unit 301.

For example, when the L1 control unit 303 issues, to the L2 control unit 305, a request to read data requested to be read by the instruction execution unit 301, the following process is started (step S1200).

In step S1201, the L2 control unit 305 searches data stored in the L2 cache 304 for the data to be read requested by the L1 control unit 303.

For example, the L2 control unit 305 searches tags registered in the L2 tag in the L2 cache 304 for a tag that matches a tag of the data to be read.

In the event of a tag that matches the tag of the data to be read being detected, the L2 control unit 305 determines that the event is a "cache hit" (S1202 NO). In this case, the L2 control unit 305 causes the process to proceed to step S1207. In the event of no tag that matches the tag of the data to be read being detected, the L2 control unit 305 determines that the event is a "cache miss" (S1202 YES). In this case, the L2 control unit 305 causes the process to proceed to step S1203.

Hereinafter, the event of a cache miss being detected in the L2 cache 304 is called an "L2 cache miss". Moreover, the event of a cache hit being detected in the L2 cache 304 is called an "L2 cache hit".

In step S1203, the VL3 control unit 307 searches tags registered in the VL3 tag for a tag that matches the tag of the data to be read.

In the event of a tag that matches the tag of the data to be read being detected, the VL3 control unit 307 determines that the event is a "cache hit" (S1204 YES). In this case, the VL3 control unit 307 causes the process to proceed to step S1205. In the event of no tag that matches the tag of the data to be read being detected, the VL3 control unit 307 determines that the event is a "cache miss" (S1204 NO). In this case, the VL3 control unit 307 causes the process to proceed to step S 1206.

Hereinafter, the event of a cache miss being detected in the VL3 cache is called a "VL3 cache miss". Moreover, the event of a cache hit being detected in the VL3 cache is called a "VL3 cache hit".

In step S1205, the VL3 control unit 307 reads the data to be read from a predetermined address in the local memory assigned to the virtual cache space. The specific operation is similar to the operation in step S1107.

In step S1206, the VL3 control unit 307 issues a read request to a Home node.

For example, the VL3 control unit 307 determines the Home node from the tag of the data to be read. The VL3 control unit 307 further retrieves a physical address at which the data to be read is stored from the tag of the data to be read. Then, the VL3 control unit 307 requests, from the determined Home node, the data to be read stored at the retrieved physical address.

Upon receiving the read request from the requesting node, the Home node reads the data to be read from the specified address in a local memory in the Home node, then sends the read data to the requesting node.

On the other hand, in step S1207, the L2 control unit 305 reads the data to be read from the L2 cache 304.

In step S1208, when the data to be read has been retrieved in the operation in step S1205 or S1206, the VL3 control unit 307 sends the retrieved data to the requester.

When the requester is the instruction execution unit 301, the VL3 control unit 307 sends the data to be read to the L2 control unit 305. Simultaneously, the VL3 control unit 307 sets the tag of the data to be read registered in the VL3 tag to be invalid so that the VL3 cache 306 and the L2 cache 304 are maintained mutually exclusive. The L2 control unit 305 sends the data to be read to the instruction execution unit 301.

When the requester is another node, the VL3 control unit 307 sends the data to be read to the requesting other node.

After the aforementioned operations are completed, the VL3 control unit 307 causes the process to proceed to step S1209 and completes the process in FIG. 12.

In step S1208, when the data to be read has been retrieved in the operation in step S1207, the L2 control unit 305 sends the data to be read to the requester.

When the requester is the instruction execution unit 301, the L2 control unit 305 sends the data to be read to the instruction execution unit 301. When the requester is another node, the L2 control unit 305 sends the data to be read to the requesting other node.

Then, the VL3 control unit 307 causes the process to proceed to step S1209 and completes the process.

FIG. 13 shows cache control in a case where an invalidation request is received from a Home node.

For example, a case where, in the Home node, access, for a store operation, to data stored in a local memory is executed, so that the data is updated, will be considered.

In this case, the Home node requests a node other than the Home node, the node storing the data having not been updated by the access for a store operation, to invalidate the data (step S1300). The process in FIG. 13 is started by the request to invalidate the data.

The process in the node having received the request to invalidate the data from the Home node will be described below. In this case, data subjected to an invalidation request is called "data to be invalidated".

In step S1301, the node having received the invalidation request receives the request to invalidate the data from the Home node.

In step S1302, the L2 control unit 305 searches data stored in the L2 cache 304 for the data to be invalidated. For example, the L2 control unit 305 searches tags registered in the L2 tag in the L2 cache 304 for a tag that matches a tag of the data to be invalidated.

As a result of the tag search, in step S1303, when an L2 cache miss is detected, the L2 control unit 305 causes the process to proceed to step S 1304 (step S 1303 YES). As a result of the tag search, when an L2 cache hit is detected, the L2 control unit 305 causes the process to proceed to step S1307 (step S1303 NO).

In step S1304, the VL3 control unit 307 searches tags registered in the VL3 tag for a tag that matches the tag of the data to be invalidated.

As a result of the tag search, in step S1305, when a VL3 cache hit is detected, the VL3 control unit 307 causes the process to proceed to step S1306 (step S1305 YES). As a result of the tag search, when a VL3 cache miss is detected, the VL3 control unit 307 causes the process to proceed to step S1308 (step S1305 NO).

In step S1306, the VL3 control unit 307 sets the tag, which matches an address to be invalidated, out of the tags registered in the VL3 tag, to be invalid.

When a tag is set to be invalid, for example, data STS [1:0] = 00 (binary) is set in an area of SVAL [7:0] for setting the status I illustrated in FIG. 6.

On the other hand, in step S1307, the L2 control unit 305 sets the tag, which matches an address to be invalidated, out of the tags registered in the L2 tag, to be invalid, in an operation similar to step S1306.

In step S1308, after setting the data to be invalidated to be invalid is completed in the operation in step S1306 or S1307, the L2 control unit 305 or the VL3 control unit 307 issues a completion response notifying the Home node that invalidation of the data is completed. Then, the L2 control unit 305 or the VL3 control unit 307 causes the process to proceed to step S 1309 and completes the process.

FIG. 14 shows cache control in a case where a node receives a move-out request from a Home node.

For example, a first node receiving a move-out request retrieves data in a remote memory as exclusive type data. Subsequently, when access to the data retrieved by the first node as exclusive type data, for example, a read request, is executed from a device in a Home node, the Home node sends a move-out request to the first node (step S1400) to maintain consistency among caches.

In this case, exclusive type data is data put in the status E or M illustrated in FIG. 5.

In step S1401, the first node receives the move-out request from the Home node.

Hereinafter, data requested to be moved out is called "data to be moved out".

In step S1402, the L2 control unit 305 searches data stored in the L2 cache 304 for data to be moved out. For example, the L2 control unit 305 searches tags registered in the L2 tag for a tag that matches a tag of the data to be moved out.

In step S1403, when an L2 cache miss is detected, the L2 control unit 305 causes the process to proceed to step S1404 (step S1403 YES). When an L2 cache hit is detected, the L2 control unit 305 causes the process to proceed to step S1407 (step S1403 NO).

In step S1404, the VL3 control unit 307 searches tags registered in the VL3 tag for a tag that matches the tag of the data to be moved out.

In step S1405, when a VL3 cache hit is detected, the VL3 control unit 307 causes the process to proceed to step S1406 (step S1405 YES). When a VL3 cache miss is detected, the VL3 control unit 307 causes the process to proceed to step S1409 (step S1405 NO).

In step S1406, the VL3 control unit 307 reads the data to be moved out from a predetermined address in the local memory assigned to the virtual cache space. The specific operation is similar to the operation in step S1107.

On the other hand, in step S1407, L2 control unit 305 reads the data to be moved out from L2 cache 304.

In step S 1408, when the data to be moved out has been retrieved in the operation in step S 1406 or S1407, the L2 control unit 305 or the VL3 control unit 307 issues a data response to the Home node.

Simultaneously, the L2 control unit 305 or the VL3 control unit 307 sends the data to be moved out to the Home node. Then, the L2 control unit 305 or the VL3 control unit 307 proceeds to step S1410 and completes.

On the other hand, in step S1409, the VL3 control unit 307 determines that an error has occurred. Then, the VL3 control unit 307 sends an error report stating that an error has occurred to the Home node.

After reporting the error to the Home node is completed, the VL3 control unit 307 causes the process to proceed to step S1410. Then, the VL3 control unit 307 completes the process.

The VL3 control unit 307 virtually implements a tertiary cache, using the VL3 tag provided in the VL3 cache 306 and the local memory MEMO provided in the same node, as described above.

When data retrieved from a remote memory is evicted from the L2 cache 304 by a replacement operation, the VL3 control unit 307 temporarily stores the evicted data in the virtually implemented tertiary cache.

Thus, when the data evicted from the L2 cache 304 is necessary again, the L2 control unit 305 can retrieve the data from the tertiary cache virtually provided in the same node.

As a result, since the L2 control unit 305 need not again retrieve the data from the remote memory, latency that occurs when the remote memory is accessed can be reduced. That is, latency that occurs when the remote memory is accessed can be improved.

Moreover, in the embodiment, only the VL3 cache 306, which stores the VL3 tag, needs to be provided to virtually implement a tertiary cache. This is because actual data is stored in the local memory assigned to the virtual cache space. Thus, a capacity greater than that of a known cache can be reserved.

Moreover, in the embodiment, upon receiving a request to invalidate data from a Home node, the VL3 control unit 307 sets a tag of data to be invalidated, the tag being registered in the VL3 tag, to be invalid. In this arrangement, consistency between a cache and another cache in another node can be maintained.

Similarly, in the embodiment, upon receiving a move-out request from a Home node, the VL3 control unit 307 sets a tag of data to be moved out, the tag being registered in the VL3 tag, to be invalid. Then, the VL3 control unit 307 reads the data to be moved out from the local memory assigned to the virtual cache space and outputs the data to be moved out to the Home node. In this arrangement, consistency between a cache and another cache in another node can be maintained.

Thus, low latency can be achieved in both access to a local memory and access to a remote memory by providing the cache control unit according to the embodiment in the information processing device 100, which performs cache coherence control according to the ccNUMA method.

In the aforementioned cache control unit, even when first cache information is output to be evicted from a first cache so as to reserve an area for storing new information, a first cache control unit can retrieve the first cache information from a second memory included in a second node that is the same node.

That is, even when the first cache information is evicted from the first cache, the first cache control unit need not again retrieve the first cache information from a first memory included in a first node that is another node.

Thus, in the cache control unit, latency that occurs because the first cache information is again retrieved from the first memory included in the other node can be reduced.

As described above, according to the cache control unit, latency that occurs when a remote memory is accessed can be improved.

## Claims

1. A data processing system (100) comprising:
a plurality of nodes (SB0, SB1, ... SB7) connected with each other, each of the nodes including a processor (CPU0, CPU1, ..) and a memory (MEMO, MEM1...);
each of the processors (CPU0, CPU1, .. ) comprising:
a processing unit (301) for processing data stored in any of the memories;
a cache memory (302, 304) for temporarily storing data to be processed by the processor; and
a cache controller (310) for controlling saving or evacuating of data in the cache memory (302, 304) in accordance with an access history by the processor to data therein, **characterised by**
a tag memory (306) for storing tag information including node information and address information of the data stored in the cache memory (302, 304) in association therewith, wherein the cache controller (310) is arranged to check if the data to be evacuated originated from the memory (MEMO, MEM1, ..) of its own node or from any other memory of any other node when evacuating data from the cache memory (302, 304), and to store the data to be evacuated from the cache memory into the memory of its own node at a particular address of the memory and store information of the particular address in the tag memory (306) as tag information such that the data stored in the particular address is made accessible by the processor in reference to the tag information when the data to be evacuated originated from any other memory of any other node.

2. The data processing system (100) of claim 1, wherein the cache controller (310) is arranged to read out the data originated from any other memory of any other node in reference to the tag information stored in the tag memory (306) and to enable the cache memory (302, 304) to store the data.

3. The data processing system (100) of claim 1 or 2, wherein the cache controller (310) is arranged to search tag information stored in the tag memory (306) upon receiving a read request from a requesting node and to send out data stored in the memory (MEMO, MEM1, ..) of its own node to the requesting node, the data corresponding to the tag information.

4. The data processing system (100) of claim 1, 2, or 3, wherein the cache controller (310) is arranged to set tag information stored in the tag memory (306) to be invalid upon receiving an invalidation request issued by a home node.

5. The data processing system (100) of claim 1, 2, 3, or 4, wherein the cache controller is responsive to a replace request from a processor of any other node to search tag information stored in the tag memory (306), the tag information corresponding to the replace request, to read out data stored in the memory (MEMO, MEM1, of its own node, and send out the data to the processor of any other node.

6. A processor (CPUO, CPU1, ..) connected to a memory (MEMO, MEM1, ..) to form a node (S130, SB1, ... SB7) used in the data processing system (100) of any preceding claim.

7. A method of controlling a processor (CPUO, CPU1, .. ) connected to a memory (MEMO, MEM1, ..), the processor and the memory being included in a node (S130, SB1, ... SB7), the node connected to a plurality of nodes each of which also includes a processor and a memory, the method comprising:
checking if the data to be evacuated originated from the memory (MEMO, MEM1,.. ) of its own node or from any other memory of any other node when evacuating data from a cache memory (302, 304) of the processor that stores data to be processed by the processor; and
storing the data to be evacuated from said cache memory (302, 304) into the memory (MEMO, MEM1, ..) of its own node at a particular address of the memory and storing information of the particular address in a tag memory (306) of the processor as tag information such that the data stored in the particular address is made accessible by the processor in reference to the tag information when the data to be evacuated originated from any other memory of any other node.

8. The method or claim 7, further comprising reading out the data originated from any other memory of any other node in reference to the tag information stored in the tag memory (306) and enabling the cache memory (302, 304) to store the data.

9. The method of claim 7 or 8, further comprising searching tag information stored in the tag memory (306) upon receiving a read request from a requesting node and sending out data stored in the memory (MEMO, MEM1,..) of its own node to the requesting node, the data corresponding to the tag information.

10. The method of claim 7, 8, or 9, further comprising setting tag information stored in the tag memory (306) to be invalid upon receiving an invalidation request from a home node.

11. The method of claim 7, 8, 9, or 10, further comprising receiving a replace request from a processor of any other node, searching tag information stored in the tag memory (306), the tag information corresponding to the replace request, reading out data stored in the memory (MEMO, MEM1, ..) of its own node, and sending out the data to the processor of any other node.

## Patentansprüche

1. Datenverarbeitungssystem (100), umfassend:
eine Vielzahl von Knoten (SB0, SB1, ... SB7), die miteinander verbunden sind, wobei jeder der Knoten einen Prozessor (CPU0, CPU1, ...) und einen Speicher (MEMO, MEM1, ...) enthält;
und jeder der Prozessoren (CPU0, CPU1, ...) umfasst:
eine Verarbeitungseinheit (301) zum Verarbeiten von Daten, die in einem der Speicher gespeichert sind;
einen Cachespeicher (302, 304) zum temporären Speichern von Daten, die durch den Prozessor zu verarbeiten sind; und
einen Cachecontroller (310) zum Steuern des Sicherns oder Evakuierens von Daten in dem Cachespeicher (302, 304) gemäß einem Zugriffsverlauf durch den Prozessor auf Daten in ihm, **gekennzeichnet durch**
einen Tag-Speicher (306) zum Speichern von Tag-Informationen, die Knoteninformationen und Adressinformationen der in dem Cachespeicher (302, 304) gespeicherten Daten in Zuordnung zueinander enthalten, bei dem der Cachecontroller (310) angeordnet ist, um zu prüfen, ob die Daten, die zu evakuieren sind, von dem Speicher (MEMO, MEM1, ... ) seines eigenen Knotens oder von irgendeinem anderen Speicher eines anderen Knotens stammen, wenn Daten aus dem Cachespeicher (302, 304) evakuiert werden, und die Daten, die aus dem Cachespeicher zu evakuieren sind, in dem Speicher seines eigenen Knotens an einer besonderen Adresse des Speichers zu speichern und Informationen der besonderen Adresse in dem Tag-Speicher (306) als Tag-Informationen zu speichern, so dass die Daten, die an der besonderen Adresse gespeichert sind, **durch** den Prozessor unter Bezugnahme auf die Tag-Informationen zugänglich sind, wenn die Daten, die zu evakuieren sind, von irgendeinem anderen Speicher eines anderen Knotens stammen.

2. Datenverarbeitungssystem (100) nach Anspruch 1, bei dem der Cachecontroller (310) angeordnet ist, um die Daten, die von irgendeinem anderen Speicher eines anderen Knotens stammen, unter Bezugnahme auf die in dem Tag-Speicher (306) gespeicherten Tag-Informationen auszulesen und den Cachespeicher (302, 304) freizugeben, um die Daten zu speichern.

3. Datenverarbeitungssystem (100) nach Anspruch 1 oder 2, bei dem der Cachecontroller (310) angeordnet ist, um Tag-Informationen, die in dem Tag-Speicher (306) gespeichert sind, bei Empfang einer Leseaufforderung von einem auffordernden Knoten zu suchen und Daten, die in dem Speicher (MEMO, MEM1, ...) seines eigenen Knotens gespeichert sind, an den auffordernden Knoten zu senden, welche Daten den Tag-Informationen entsprechen.

4. Datenverarbeitungssystem (100) nach Anspruch 1, 2 oder 3, bei dem der Cachecontroller (310) angeordnet ist, um Tag-Informationen, die in dem Tag-Speicher (306) gespeichert sind, bei Empfang einer Invalidierungsaufforderung, die durch einen Heimatknoten ausgegeben wird, zu invalidieren.

5. Datenverarbeitungssystem (100) nach Anspruch 1, 2, 3 oder 4, bei dem der Cachecontroller auf eine Austauschaufforderung von einem Prozessor eines anderen Knotens antwortet, um Tag-Informationen zu suchen, die in dem Tag-Speicher (306) gespeichert sind, welche Tag-Informationen der Austauschaufforderung entsprechen, Daten, die in dem Speicher (MEMO, MEM1, ...) seines eigenen Knotens gespeichert sind, auszulesen und die Daten an den Prozessor eines anderen Knotens zu senden.

6. Prozessor (CPU0, CPU1, ...), der mit einem Speicher (MEMO, MEM1, ...) verbunden ist, um einen Knoten (SB0, SB1, ... SB7) zu bilden, der in dem Datenverarbeitungssystem (100) nach einem vorhergehenden Anspruch verwendet wird.

7. Verfahren zum Steuern eines Prozessors (CPU0, CPU1, ...), der mit einem Speicher (MEMO, MEM1, ...) verbunden ist, wobei der Prozessor und der Speicher in einem Knoten (SB0, SB1, ... SB7) enthalten sind, welcher Knoten mit einer Vielzahl von Knoten verbunden ist, von denen jeder auch einen Prozessor und einen Speicher enthält, welches Verfahren umfasst:
Prüfen, ob die Daten, die zu evakuieren sind, von dem Speicher (MEMO, MEM1, ...) seines eigenen Knotens oder von irgendeinem anderen Speicher eines anderen Knotens stammen, wenn Daten aus einem Cachespeicher (302, 304) des Prozessors evakuiert werden, der Daten speichert, die durch den Prozessor zu verarbeiten sind; und
Speichern der Daten, die aus dem Cachespeicher (302, 304) zu evakuieren sind, in dem Speicher (MEMO, MEM1, ...) seines eigenen Knotens an einer besonderen Adresse des Speichers und Speichern von Informationen der besonderen Adresse in einem Tag-Speicher (306) des Prozessors als Tag-Informationen, so dass die Daten, die an der besonderen Adresse gespeichert sind, durch den Prozessor unter Bezugnahme auf die Tag-Informationen zugänglich sind, wenn die Daten, die zu evakuieren sind, von irgendeinem anderen Speicher eines anderen Knotens stammen.

8. Verfahren nach Anspruch 7, ferner mit dem Auslesen der Daten, die von irgendeinem anderen Speicher eines anderen Knotens stammen, unter Bezugnahme auf die in dem Tag-Speicher (306) gespeicherten Tag-Informationen und dem Freigeben des Cachespeichers (302, 304), um die Daten zu speichern.

9. Verfahren nach Anspruch 7 oder 8, ferner mit dem Suchen von Tag-Informationen, die in dem Tag-Speicher (306) gespeichert sind, bei Empfang einer Leseaufforderung von einem auffordernden Knoten und Senden von Daten, die in dem Speicher (MEMO, MEM1, ...) seines eigenen Knotens gespeichert sind, an den auffordernden Knoten, welche Daten den Tag-Informationen entsprechen.

10. Verfahren nach Anspruch 7, 8 oder 9, ferner mit dem Invalidieren von Tag-Informationen, die in dem Tag-Speicher (306) gespeichert sind, bei Empfang einer Invalidierungsaufforderung von einem Heimatknoten.

11. Verfahren nach Anspruch 7, 8, 9 oder 10, ferner mit dem Empfangen einer Austauschaufforderung von einem Prozessor eines anderen Knotens, dem Suchen von Tag-Informationen, die in dem Tag-Speicher (306) gespeichert sind, welche Tag-Informationen der Austauschaufforderung entsprechen, dem Auslesen von Daten, die in dem Speicher (MEMO, MEM1, ...) seines eigenen Knotens gespeichert sind, und dem Senden der Daten an den Prozessor eines anderen Knotens.

## Revendications

1. Système de traitement de données (100) comprenant :
une pluralité de noeuds (SB0, SB1, ... SB7) mutuellement connectés, chacun des noeuds incluant un processeur (CPU0, CPU1, ...) et une mémoire (MEMO, MEM1, ... ) ;
chacun des processeurs (CPU0, CPU1, ...) comprenant :
une unité de traitement (301) destinée à traiter des données stockées dans l'une quelconque des mémoires ;
une mémoire cache (302, 304) pour stocker temporairement des données destinées à être traitées par le processeur ; et
un contrôleur de mémoire cache (310) pour commander l'enregistrement ou l'évacuation des données dans la mémoire cache (302, 304) selon un historique des accès du processeur aux données en mémoire, **caractérisé par** :
une mémoire d'étiquettes (306) destinée à stocker des informations d'étiquettes, incluant des informations de noeuds et des informations d'adresses, des données stockées dans la mémoire cache (302, 304) en association avec celles-ci, dans lequel le contrôleur de mémoire cache (310) est agencé de manière à vérifier si les données destinées à être évacuées provenaient de la mémoire (MEMO, MEM1, ...) de son propre noeud ou d'une quelconque autre mémoire d'un quelconque autre noeud, lors de l'évacuation de données de la mémoire cache (302, 304), et à stocker les données devant être évacuées de la mémoire cache dans la mémoire de son propre noeud au niveau d'une adresse spécifique de la mémoire, et à stocker des informations de l'adresse spécifique dans la mémoire d'étiquettes (306) sous la forme d'informations d'étiquettes, de sorte que les données stockées au niveau de l'adresse spécifique sont rendues accessibles par le processeur en référence aux informations d'étiquettes lorsque les données devant être évacuées provenaient d'une quelconque autre mémoire d'un quelconque autre noeud.

2. Système de traitement de données (100) selon la revendication 1, dans lequel le contrôleur de mémoire cache (310) est agencé de manière à lire les données provenant d'une quelconque autre mémoire d'un quelconque autre noeud en référence aux informations d'étiquettes stockées dans la mémoire d'étiquettes (306), et à permettre à la mémoire cache (302, 304) de stocker les données.

3. Système de traitement de données (100) selon la revendication 1 ou 2, dans lequel le contrôleur de mémoire cache (310) est agencé de manière à rechercher des informations d'étiquettes stockées dans la mémoire d'étiquettes (306) lors de la réception d'une demande de lecture en provenance d'un noeud demandeur, et à envoyer des données stockées dans la mémoire (MEMO, MEM1, ...) de son propre noeud au noeud demandeur, les données correspondant aux informations d'étiquettes.

4. Système de traitement de données (100) selon la revendication 1, 2, ou 3, dans lequel le contrôleur de mémoire cache (310) est agencé de manière à définir des informations d'étiquettes stockées dans la mémoire d'étiquettes (306) comme étant non valides, suite à la réception d'une demande d'invalidation émise par un noeud d'origine.

5. Système de traitement de données (100) selon la revendication 1, 2, 3, ou 4, dans lequel le contrôleur de mémoire cache répond à une demande de remplacement en provenance d'un processeur d'un quelconque autre noeud en vue de rechercher des informations d'étiquettes stockées dans la mémoire d'étiquettes (306), les informations d'étiquettes correspondant à la demande de remplacement, de lire des données stockées dans la mémoire (MEMO, MEM1, ...) de son propre noeud, et d'envoyer les données au processeur d'un quelconque autre noeud.

6. Processeur (CPU0, CPU1, ...) connecté à une mémoire (MEMO, MEM1, ...) en vue de former un noeud (SB0, SB1, ... SB7) utilisé dans le système de traitement de données (100) selon l'une quelconque des revendications précédentes.

7. Procédé destiné à commander un processeur (CPU0, CPU1, ...) connecté à une mémoire (MEMO, MEM1, ...), le processeur et la mémoire étant inclus dans un noeud (SB0, SB1, ... SB7), le noeud étant connecté à une pluralité de noeuds dont chacun comprend en outre un processeur et une mémoire, le procédé comprenant les étapes ci-dessous consistant à :
vérifier si les données destinées à être évacuées provenaient de la mémoire (MEMO, MEM1, ...) de son propre noeud ou d'une quelconque autre mémoire d'un quelconque autre noeud, lors de l'évacuation de données de la mémoire cache (302, 304) du processeur qui stocke des données destinées à être traitées par le processeur ; et
stocker les données destinées à être évacuées de ladite mémoire cache (302, 304) dans la mémoire (MEMO, MEM1, ...) de son propre noeud au niveau d'une adresse spécifique de la mémoire, et stocker des informations de l'adresse spécifique dans une mémoire d'étiquettes (306) du processeur, sous la forme d'informations d'étiquettes, de sorte que les données stockées au niveau de l'adresse spécifique sont rendues accessibles par le processeur en référence aux informations d'étiquettes, lorsque les données devant être évacuées provenaient d'une quelconque autre mémoire d'un quelconque autre noeud.

8. Procédé selon la revendication 7, comprenant en outre l'étape consistant à lire les données provenant d'une quelconque autre mémoire d'un quelconque autre noeud en référence aux informations d'étiquettes stockées dans la mémoire d'étiquettes (306), et l'étape consistant à permettre à la mémoire cache (302, 304) de stocker les données.

9. Procédé selon la revendication 7 ou 8, comprenant en outre l'étape consistant à rechercher des informations d'étiquettes stockées dans la mémoire d'étiquettes (306), suite à la réception d'une demande de lecture en provenance d'un noeud demandeur, et l'étape consistant à envoyer des données stockées dans la mémoire (MEMO, MEM1, ...) de son propre noeud au noeud demandeur, les données correspondant aux informations d'étiquettes.

10. Procédé selon la revendication 7, 8, ou 9, comprenant en outre l'étape consistant à définir des informations d'étiquettes stockées dans la mémoire d'étiquettes (306) comme étant non valides suite à la réception d'une demande d'invalidation en provenance d'un noeud d'origine.

11. Procédé selon la revendication 7, 8, 9, ou 10, comprenant en outre l'étape consistant à recevoir une demande de remplacement en provenance d'un processeur d'un quelconque autre noeud, l'étape consistant à rechercher des informations d'étiquettes stockées dans la mémoire d'étiquettes (306), les informations d'étiquettes correspondant à la demande de remplacement, l'étape consistant à lire des données stockées dans la mémoire (MEMO, MEM1, ...) de son propre noeud, et l'étape consistant à envoyer les données au processeur d'un quelconque autre noeud.
